# EUROPÄISCHE PATENTSCHRIFT

(11) **EP 2 337 704 B1**
(45) Veröffentlichungstag und Bekanntmachung des Hinweises auf die Patenterteilung: **26.03.2014**
(21) Anmeldenummer: 09781738.1
(22) Anmeldetag: 12.08.2009
(51) Int. Cl.: B60N 2/02, B60N 2/16

(54) **UNTERGESTELL EINES KRAFTFAHRZEUGSITZES MIT ZWEI SCHIENENPAAREN, SCHWINGEN UND EINEM SITZTRÄGER**
BASE FRAME OF A VEHICLE SEAT COMPRISING TWO PAIRS OF RAILS, ROCKERS AND ONE SEAT SUPPORT
CHÂSSIS DE SIÈGE DE VÉHICULE AUTOMOBILE AVEC DEUX PAIRES DE RAILS, DES BIELLES ET UN SUPPORT DE SIÈGE

(30) Priorität: 19.08.2008 DE 102008041345
(43) Veröffentlichungstag der Anmeldung: 29.06.2011
(73) Patentinhaber: C. Rob. Hammerstein GmbH & Co. Kg, 42699 Solingen (DE)
(72) Erfinder: BENEKER, Wilfried, 42799 Leichlingen (DE); BECKER, Burckhard, 42657 Solingen (DE); LUFT, Waldemar, 42651 Solingen (DE)
(74) Vertreter: Bauer Vorberg Kayser Patentanwälte
(86) Internationale Anmeldenummer: PCT/EP2009/060421
(87) Internationale Veröffentlichungsnummer: WO 2010/020567

(56) Entgegenhaltungen:
- DE-A1- 10 044 851
- US-B1- 6 502 798

## Beschreibung

Die Erfindung bezieht sich auf ein Untergestell eines Kraftfahrzeugsitzes mit zwei Schienenpaaren, zwei vorderen Schwingen, zwei hinteren Schwingen und einem Sitzträger, der zwei Seitenteile, eine vordere Traverse und eine hintere Traverse aufweist, wobei jedes Schienenpaar über eine vordere Schwinge und eine hintere Schwinge mit einem Seitenteil gelenkverbunden ist und ein Stellantrieb für die Höheneinstellung des Sitzträgers vorgesehen ist. Ein derartiges Untergestell ist aus US 6,502,798 B1 bekannt.

Aus dem Dokument DE 10044851 A1 ist ein einzelnes Rahmenteil eines Sitzträgers eines Kraftfahrzeugsitzes bekannt, das mittels vorderer und hinterer Schwingen mit einem nicht dargestellten Schienenpaar gelenkverbunden ist. Es ist ein Stellantrieb für die Höhenverstellung vorgesehen. Das rückwärtige Schwingenpaar ist durch ein Querstück miteinander verbunden und bildet mit einen Teil des Paares ein Abstützteil, das ebenso wie der andere Teil des Paars einen Anlenkbereich für ein Verstellteil des Stellantriebs aufweist.

Bei Untergestellen für Kraftfahrzeugsitze ist man bestrebt, die Bauhöhe gering zu halten. Weiterhin ist der Platz innerhalb des Untergestells häufig mit unterschiedlichen Bauelementen und Antrieben in Beschlag genommen. Dies gilt insbesondere bei voller Ausrüstung des Kraftfahrzeugsitzes mit dem Maximum der vom Hersteller angebotenen Möglichkeiten für Verstellung und Nutzung des Sitzes.

Durchgesetzt hat sich für eine Höhenverstellung eines Untergestells eine Kombination aus Zahnbogen und Ritzel, hierzu wird nur beispielhaft verwiesen auf die o. g. US 6,502,798 B1, weiterhin wird eingesetzt eine Kombination aus Zahnstange und Gesperre, siehe nur beispielhaft EP 1 190 891 B1. Zum Stand der Technik wird noch verwiesen auf US 3,765,720 A und US 5,622,406 A.

Es wird angestrebt, dass möglichst nicht beide Sitzseiten mit Bauteilen des Stellantriebs versehen und aktiv verstellt sind, vielmehr möglichst nur ein einziger Stellantrieb vorgesehen ist, der mehr oder weniger einer Sitzseite zugeordnet ist. In diesem Fall ist das Untergestell so ausgelegt, dass die andere Sitzseite passiv mitverstellt wird.

Hiervon ausgehend hat sich die Erfindung die Aufgabe gestellt, ein höhenverstellbares Untergestell für einen Kraftfahrzeugsitz anzugeben, das einen einzigen Stellantrieb und möglichst wenig Komponenten aufweist, wobei gängige Antriebskomponenten eingesetzt werden, und das sich für eine einseitige Arretierung eignet.

Gelöst wird diese Aufgabe durch ein Untergestell mit den Merkmalen des Anspruchs 1.

Bei diesem Untergestell ist der Stellantrieb im Wesentlichen entlang einer Diagonalen des Gelenkvierecks angeordnet. Es wird lediglich ein Stellantrieb vorgesehen, der sich näher einer Sitzseite befindet als der anderen Sitzseite. Dabei wird vorzugsweise für den Stellantrieb ein Spindelantrieb eingesetzt, wie er aus dem Stand der Technik vielfach bekannt ist, nur beispielhaft wird verwiesen auf US 2006/0260424 A1.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das im Folgenden unter Bezugnahme auf die Zeichnung näher erläutert wird. In dieser Zeichnung zeigen:
- Fig. 1:: eine perspektivische Darstellung, gesehen von schräg oben vorn, eines Untergestells nach der Erfindung und
- Fig. 2:: ein Schnittbild entlang einer Schnittebene II-II, die parallel zur y-z-Ebene ist.

Das Untergestell nach der dargestellten Ausführung ist als so genanntes Gelenkviereck mit Parallelogrammarmen bzw. in Parallelogramm-Kinematik ausgeführt. Derartige Ausbildungen sind aus dem Stand der Technik allgemein bekannt. Das Untergestell hat ein linkes Schienenpaar 20 und ein rechtes Schienenpaar 22. Ein Sitzträger weist ein linkes Seitenteil 24, ein rechtes Seitenteil 26, eine vordere Traverse 28 und eine hintere Traverse 30 auf. Diese vier Teile bilden im Wesentlichen einen Rahmen. Er ist vorzugsweise starr. Die vier Teile sind miteinander verbunden. Im rückwärtigen Bereich der Seitenteile 24, 26 sind Bohrungen vorgesehen, sie dienen u. a. der Aufnahme eines Rückenlehnengelenks mit Rückenlehne (nicht dargestellt).

Jedes der Schienenpaare 20, 22 ist mit dem darüber befindlichen Seitenteil 24, 26 vorn über eine vordere Schwinge 32 und hinten über eine hintere Schwinge 34 gelenkverbunden. Das vordere oder das hintere Schwingenpaar kann auch durch ein äquivalentes Mittel ersetzt werden, beispielsweise eine Kulissenführung, Längsführung oder dergleichen. Wenn in der Ausführung die Traversen 28, 30 als Rohre ausgeführt sind, ist dies nicht einschränkend zu verstehen. Die Traversen können als beliebig geformte Teile ausgeführt sein. Ihre Aufgabe ist es, die beiden Seitenteile 24, 26 zu verbinden.

Es ist ein Stellantrieb 36 vorgesehen, er ist als Spindelantrieb ausgeführt. Er ändert seine Länge bei Betätigung. Er hat einen Getriebemotor 38, der parallel ausgerichtet ist zur vorderen Traverse 28 und sich in deren unmittelbarer Nähe befindet. Jedenfalls ist sein Abstand von der vorderen Traverse 28 fünf bis 30% des Abstandes der Traversen 28, 30 voneinander. Der Getriebemotor 38 ist über einen Lagerbock 40 mit der vorderen Traverse 28 gelenkig verbunden. Hierzu sind zwei Lageraugen an dieser Traverse 28 befestigt. Sie ragen in x-Richtung nach hinten. Der Getriebemotor 38 dreht in bekannter Weise eine Spindelmutter (nicht dargestellt). Sie ist in Eingriff mit einer Spindel 52. Bei Betätigung des Getriebemotors 38 wird die Spindel 52 ein- oder ausgefahren. Sie dreht sich dabei nicht.

Ein oberer Anlenkpunkt der beiden vorderen Schwingen 32 befindet sich in y-Richtung gesehen hinter der vorderen Traverse 28 und etwa in Höhe des Lagerbocks 40 bzw. des Getriebemotors 38. Er befindet sich in der Ebene, die durch die Traversen 28, 30 definiert ist.

Während die anderen drei Schwingen 32, 34 nach dem Stand der Technik ausgebildet sind, ist die rechte hintere Schwinge 34 erfindungsgemäß weitergebildet. Sie ist mit einem Querstück 42 verbunden. Es befindet sich in einer Ebene, die durch die Längsrichtung dieser Schwinge 34 und die hintere Traverse 30 definiert wird. Mit dieser hinteren Traverse 34, im Folgenden benachbarte Traverse genannt, ist das Querstück 42 in einer Schweißnaht 44 verbunden. Andere Befestigungsmöglichkeiten sind möglich. Es kann auch auf eine Befestigung verzichtet werden, allerdings ist eine Anlage gegeben. Jede andere der restlichen Schwingen kann alternativ mit dem Querstück 42 verbunden sein.

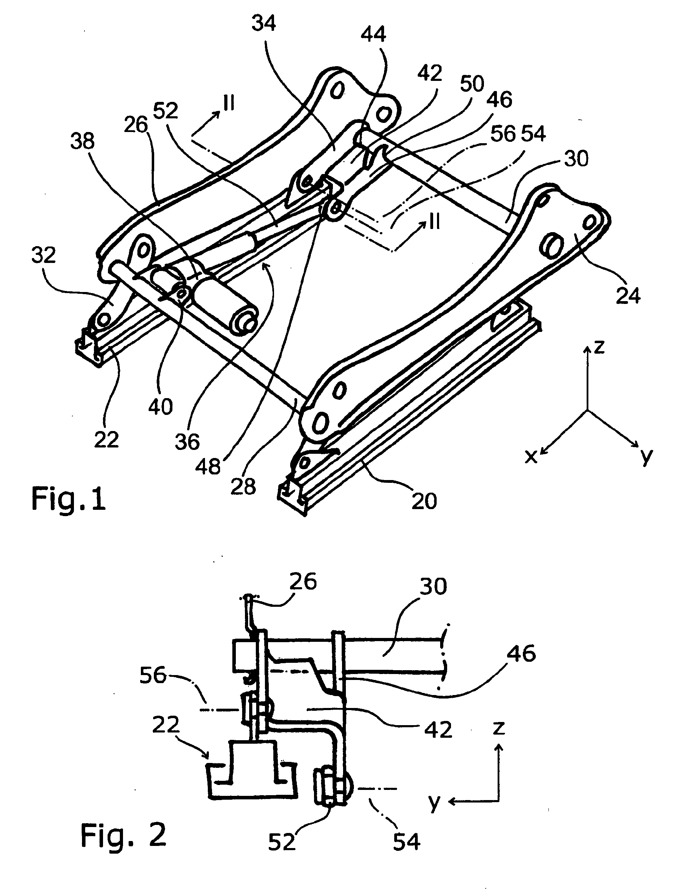

Das Querstück 42 erstreckt sich über eine Länge, in Längsrichtung der zugehörigen Schwinge 34 gesehen, von etwa 60% des Gelenkabstandes dieser Schwinge 30. Das Querstück 42 hat eine Breite, die sich in y-Richtung erstreckt, sie ist etwa die Hälfte der Länge. Das Querstück 42 springt von der Unterseite der Schwinge 34 nach innen vor. An seinem freien Ende ist ein Abstützteil 46 vorgesehen. Es ist nach unten gerichtet. In x-Richtung gesehen ist daher die Einheit aus Schwinge 34, Querstück 42 und Abstützteil 46 nahezu Z-förmig. Dies zeigt Figur 2. Das Abstützteil 46 ist ähnlich der eigentlichen Schwinge 34 geformt. Es hat einen in x-Richtung nach vorn weisenden Anlenkbereich 48 und in Gegenrichtung einen Anlagebereich 50, mit dem es sich an der benachbarten Traverse 30 abstützt, vorzugsweise mit einer Schweißnaht 44 oder ähnlich verbunden ist.

Der Anlenkbereich 48 ist mit dem Ende einer Spindel 52 gelenkverbunden. Die Achse wird als Anlenkbereichsachse 54 bezeichnet. Die Schwinge 34 ist in einem Lagerteil mit der Sitzschiene des rechten Schienenpaars 22 gelenkverbunden, dies erfolgt um eine untere Schwingenachse 56. Die beiden Achsen 54, 56 sind parallel zueinander, sie sind auch parallel zu den Traversen 28, 30. Die beiden Achsen liegen vorzugsweise in einer Ebene, die parallel zur y-z-Ebene ist. Sie haben vorzugsweise einen Abstand voneinander, der zwischen 0 und 50 mm liegen kann.

Vorzugsweise ist die Einheit aus Schwinge 34, Querstück 42 und Abstützteil 46 einstückig hergestellt. Sie kann aus einem Blechzuschnitt erhalten werden, dies ist in der Ausführung gezeigt. Dabei wird ein Blechzuschnitt an den beiden Längsbegrenzungen des Querstücks 42 in unterschiedliche Richtungen abgebogen, wie dies aus Figur 2 ersichtlich ist. Am Anlagebereich 50 hat das Querstück 42 einen Ausschnitt, das Material dieses Ausschnitts findet sich in einer oberen Nase des Abstützteils 46, dadurch erfolgt die Abstützung über einen größeren Boden an der Traverse 30.

Der Anlenkpunkt von Spindel 52 und Anlenkbereich 48 hat einen Abstand vom rechten Seitenteil 26, der deutlich kleiner ist als der Abstand vom linken Seitenteil. Das Verhältnis beträgt etwa 1:4. Es kann im Bereich 5 bis 40%, vorzugsweise 8-25% liegen.

## Patentansprüche

1. Untergestell eines Kraftfahrzeugsitzes mit zwei Schienenpaaren (20, 22), zwei vorderen Schwingen (32), zwei hinteren Schwingen (34) und einem Sitzträger, der zwei Seitenteile (24, 26), eine vordere Traverse (28) und eine hintere Traverse (30) aufweist, wobei die vordere Traverse (28) und die hintere Traverse (30) jeweils die beiden Seitenteile (24, 26) verbinden und jedes Schienenpaar (20, 22) über eine vordere Schwinge (32) und eine hintere Schwinge (34) mit einem der beiden Seitenteile (24, 26) gelenkverbunden ist und ein Stellantrieb (36) für die Höheneinstellung des Sitzträgers vorgesehen ist, **dadurch gekennzeichnet, dass** eine Schwinge mit einem Querstück (42) verbunden ist, dass ein Abstützteil (46) vorgesehen ist, das mit dem Querstück (42) verbunden ist, und dass das Abstützteil (46) einen Anlenkbereich (48) für ein Verstellteil des Stellantriebes (36) und einen Anlagebereich (50) an der benachbarten Traverse (28, 30) aufweist.

2. Untergestell eines Kraftfahrzeugsitzes nach Anspruch 1, **dadurch gekennzeichnet, dass** der Stellantrieb (36) zwischen der entfernten Traverse (28, 30) und dem Anlenkbereich (48) angeordnet ist.

3. Untergestell eines Kraftfahrzeugsitzes nach Anspruch 1, **dadurch gekennzeichnet, dass** das Abstützteil (46) mit einer Abweichung von ± 20° im Wesentlichen parallel zur Schwinge angeordnet ist.

4. Untergestell eines Kraftfahrzeugsitzes nach Anspruch 1, **dadurch gekennzeichnet, dass** die Schwinge, das Querstück (42) und das Abstützteil (46) einstückig miteinander verbunden sind.

5. Untergestell eines Kraftfahrzeugsitzes nach Anspruch 1, **dadurch gekennzeichnet, dass** Schwinge, Querstück (42) und Abstützteil (46) aus einem Blechzuschnitt durch Verformung hergestellt sind.

6. Untergestell eines Kraftfahrzeugsitzes nach Anspruch 1, **dadurch gekennzeichnet, dass** das Abstützteil (46) am Anlagebereich (50) mit der benachbarten Traverse (28, 30) verbunden ist.

7. Untergestell eines Kraftfahrzeugsitzes nach Anspruch 1, **dadurch gekennzeichnet, dass** das Querstück (42) sich über eine Länge erstreckt, die 40-90% des Abstands der Gelenkpunkte der Schwinge beträgt.

8. Untergestell eines Kraftfahrzeugsitzes nach Anspruch 1, **dadurch gekennzeichnet, dass** das Querstück (42) eine Breite hat, die 20-200% der Längenabmessung des Querstücks (42) beträgt.

9. Untergestell eines Kraftfahrzeugsitzes nach Anspruch 1, **dadurch gekennzeichnet, dass** das Querstück (42) in einem rechten Winkel ± 15° zur zugehörigen Schwinge und/oder zum Abstützteil (46) verläuft.

10. Untergestell eines Kraftfahrzeugsitzes nach Anspruch 1, **dadurch gekennzeichnet, dass** der Stellantrieb (36) einen Getriebemotor (38) aufweist, und dass der Getriebemotor (38) in Nähe der anderen, entfernten Traverse (28, 30) in einem Lagerbock (40) gehalten ist.

11. Untergestell eines Kraftfahrzeugsitzes nach Anspruch 1, **dadurch gekennzeichnet, dass** der Anlenkbereich (48) eine Anlenkbereichsachse (54) hat, dass die Schwinge eine untere Schwingenachse (56) hat und dass die Anlenkbereichsachse (54) und die untere Schwingenachse (56) parallel zueinander verlaufen.

12. Untergestell eines Kraftfahrzeugsitzes nach Anspruch 11, **dadurch gekennzeichnet, dass** ein Abstand zwischen der Anlenkbereichsachse (54) und der unteren Schwingenachse (56) kleiner als 30 mm, insbesondere kleiner als 15 mm ist, und dass beide Achsen vorzugsweise gleichachsig sind.

## Claims

1. Base frame of a motor vehicle seat, comprising two rail pairs (20, 22), two front rockers (32), two rear rockers (34) and one seat support which has two side parts (24, 26), a front cross member (28) and a rear cross member (30), wherein the front cross member (28) and the rear cross member (30) respectively connect the two side parts (24, 26) and each rail pair (20, 22) is hinged to one of the two side parts (24, 26) via a front rocker (32) and a rear rocker (34), and an actuator (36) is provided for the height adjustment of the seat support, **characterised in that** a rocker is connected to a transverse part (42); that a support part (46) is provided which is connected to the transverse part (42), and that the support part (46) comprises a hinge area (48) for an adjustment part of the actuator (36) and a contact area (50) on the adjacent cross member (28, 30).

2. Base frame of a motor vehicle seat according to claim 1, **characterised in that** the actuator (36) is disposed between the remote cross member (28, 30) and the hinge area (48).

3. Base frame of a motor vehicle seat according to claim 1, **characterised in that** the support part (46) is disposed substantially parallel to the rocker with a deviation of ± 20°.

4. Base frame of a motor vehicle seat according to claim 1, **characterised in that** the rocker, the transverse part (42) and the support part (46) are interconnected integrally.

5. Base frame of a motor vehicle seat according to claim 1, **characterised in that** the rocker, the transverse part (42) and the support part (46) are produced from a sheet-metal blank by deformation.

6. Base frame of a motor vehicle seat according to claim 1, **characterised in that** the support part (46) is connected to the adjacent cross member (28, 30) at the contact area (50).

7. Base frame of a motor vehicle seat according to claim 1, **characterised in that** the transverse part (42) extends over a length that is 40-90% of the distance of the hinge points of the rocker.

8. Base frame of a motor vehicle seat according to claim 1, **characterised in that** the transverse part (42) has a width that is 20-200% of the longitudinal dimension of the transverse part (42).

9. Base frame of a motor vehicle seat according to claim 1, **characterised in that** the transverse part (42) extends at a right angle ± 15° to the associated rocker and/or to the support part (46).

10. Base frame of a motor vehicle seat according to claim 1, **characterised in that** the actuator (36) comprises a gear motor (38), and that the gear motor (38) is retained, in the vicinity of the other, remote cross member (28, 30), in a bearing block (40).

11. Base frame of a motor vehicle seat according to claim 1, **characterised in that** the hinge area (48) comprises a hinge area axis (54), that the rocker has a lower rocker axis (56), and that the hinge area axis (54) and the lower rocker axis (56) extend parallel to each other.

12. Base frame of a motor vehicle seat according to claim 11, **characterised in that** a distance between the hinge area axis (54) and the lower rocker axis (56) is less than 30 mm, in particular less than 15 mm, and that the two axes are preferably coaxial.

## Revendications

1. Châssis d'un siège de véhicule automobile, comprenant deux paires de rails (20, 22), deux bras oscillants avant (32), deux bras oscillants arrière (34) et un support de siège qui présente deux parties latérales (24, 26), une traverse avant (28) et une traverse arrière (30), ladite traverse avant (28) et ladite traverse arrière (30) reliant chacune les deux parties latérales (24, 26), et chaque paire de rails (20, 22) étant reliée de manière articulée, par un bras oscillant avant (32) et un bras oscillant arrière (34), à l'une des deux parties latérales (24, 26), et un vérin (36) étant prévu pour le réglage en hauteur du support de siège, **caractérisé par le fait qu'**un bras oscillant est relié à une pièce transversale (42), qu'une pièce support (46) est prévue qui est reliée à ladite pièce transversale (42) et que ladite pièce support (46) présente une zone d'articulation (48) pour une pièce de réglage du vérin (36) ainsi qu'une zone d'appui (50) sur la traverse (28, 30) voisine.

2. Châssis d'un siège de véhicule automobile selon la revendication 1, **caractérisé par le fait que** ledit vérin (36) est disposé entre la traverse (28, 30) éloignée et ladite zone d'articulation (48).

3. Châssis d'un siège de véhicule automobile selon la revendication 1, **caractérisé par le fait que** ladite pièce support (46) est disposée pour l'essentiel parallèlement au bras oscillant, avec un écart de ± 20°.

4. Châssis d'un siège de véhicule automobile selon la revendication 1, **caractérisé par le fait que** le bras oscillant, la pièce transversale (42) et la pièce support (46) sont reliés d'un seul tenant entre eux.

5. Châssis d'un siège de véhicule automobile selon la revendication 1, **caractérisé par le fait que** les bras oscillant, pièce transversale (42) et pièce support (46) sont réalisés par déformation à partir d'un flan en tôle.

6. Châssis d'un siège de véhicule automobile selon la revendication 1, **caractérisé par le fait que** ladite pièce support (46) est reliée sur la zone d'appui (50) à la traverse (28, 30) voisine.

7. Châssis d'un siège de véhicule automobile selon la revendication 1, **caractérisé par le fait que** ladite pièce transversale (42) s'étend sur une longueur qui fait entre 40 et 90 % de la distance des points d'articulation du bras oscillant.

8. Châssis d'un siège de véhicule automobile selon la revendication 1, **caractérisé par le fait que** ladite pièce transversale (42) présente une largeur qui fait entre 20 et 200 % de la dimension de longueur de ladite pièce transversale (42).

9. Châssis d'un siège de véhicule automobile selon la revendication 1, **caractérisé par le fait que** ladite pièce transversale (42) s'étend à un angle droit ± 15° par rapport au bras oscillant associé et/ou à ladite pièce support (46).

10. Châssis d'un siège de véhicule automobile selon la revendication 1, **caractérisé par le fait que** ledit vérin (36) comprend un moto-réducteur (38) et que ledit moto-réducteur (38) est maintenu à proximité de l'autre traverse (28, 30) éloignée dans un support (40).

11. Châssis d'un siège de véhicule automobile selon la revendication 1, **caractérisé par le fait que** ladite zone d'articulation (48) présente un axe de zone d'articulation (54), que le bras oscillant présente un axe inférieur de bras oscillant (56) et que ledit axe de zone d'articulation (54) et ledit axe inférieur de bras oscillant (56) s'étendent parallèlement entre eux.

12. Châssis d'un siège de véhicule automobile selon la revendication 1, **caractérisé par le fait qu'**une distance séparant ledit axe de zone d'articulation (54) et ledit axe inférieur de bras oscillant (56) est inférieure à 30 mm, en particulier inférieure à 15 mm et que les deux axes sont de préférence coaxiaux.
